# FASCICULE DE BREVET EUROPEEN

(11) **EP 3 823 504 B1**
(45) Date de publication et mention de la délivrance du brevet: **18.12.2024**
(21) Numéro de dépôt: 19737115.6
(22) Date de dépôt: 10.07.2019
(51) Int. Cl.: A47J 36/16, A47J 37/06, A47J 45/07

(54) **APPAREIL DE CUISSON DU TYPE FRITEUSE A AIR CHAUD AVEC ACCESSOIRES DE CUISSON POUR DIVERSES PREPARATIONS ALIMENTAIRES**
HEISSLUFTFRITTIERGERÄT MIT KOCHZUBEHÖR FÜR VERSCHIEDENE LEBENSMITTELZUBEREITUNGEN
HOT AIR FRYER COOKING APPARATUS WITH COOKING ACCESSORIES FOR VARIOUS FOOD PREPARATIONS

(30) Priorité: 16.07.2018 FR 1856561
(43) Date de publication de la demande: 26.05.2021
(73) Titulaire: SEB S.A., 69130 Ecully (FR)
(72) Inventeur: CORNU, Jérémy, 69007 LYON (FR); PRIETO, Guillaume, 21380 MARSANNAY LE BOIS (FR); SEURAT, Frédéric, 21490 BRETIGNY (FR)
(74) Mandataire: SEB Développement
(86) Numéro de dépôt international: PCT/EP2019/068628
(87) Numéro de publication internationale: WO 2020/016085

(56) Documents cités:
- WO-A1-2012/123464
- WO-A1-2017/085679
- CN-U- 206 213 917
- FR-A1- 2 871 042
- US-A1- 2014 366 746

## Description

### Domaine technique

La présente invention concerne un appareil de cuisson du type friteuse à air chaud. L'invention vise en particulier à accessoiriser ledit appareil pour permettre la préparation de diverses recettes au moyen de divers modes de cuisson.

### Etat de la technique

Les appareils de cuisson du type friteuse à air chaud sont connus de l'homme du métier. De tels appareils permettent de réduire fortement la quantité de matière grasse, voire de la supprimer complètement, pendant la cuisson des aliments qui peuvent être d'origine végétale ou animale, par exemple des frites, des légumes, de la viande ou du poisson. En effet, la cuisson s'effectue avec peu ou pas d'huile grâce à de l'air chaud circulant dans une chambre de cuisson, ce qui permet de consommer des aliments plus diététiques, croustillants à l'extérieur et moelleux à l'intérieur. Etant donné la réduction ou la suppression de l'huile pour la cuisson, ces appareils dégagent moins d'odeurs et de graisses ; leur nettoyage est en outre simplifié.

Un appareil de cuisson du type friteuse à air chaud comprend généralement une cuve qui reçoit un panier dans lequel sont disposés des aliments à cuire. Une fois les aliments disposés dans le panier et celui-ci positionné dans la cuve, l'appareil de cuisson peut être fermé pour former une chambre de cuisson incorporant la cuve, le panier et les aliments. De l'air chaud est ensuite pulsé dans cette chambre au moyen d'un système de soufflage d'air chaud présent sur ledit appareil, la circulation de l'air chaud assurant ainsi la cuisson des aliments. Une poignée de manipulation est fixée au panier afin de pouvoir extraire celui-ci de la cuve sans se brûler et retirer les aliments en fin de cuisson.

Certains appareils de cuisson de type friteuse à air chaud comprennent des accessoires complémentaires permettant d'étendre les fonctions de ces appareils. En effet, la cuisson se faisant au moyen de l'air chaud soufflé dans la chambre, il est possible d'envisager l'utilisation de ces appareils pour d'autres préparations culinaires Par exemple, la friteuse à air chaud de la marque ACTIFRY^{®}, développée par la demanderesse, prévoit un accessoire pour la préparation de verrines chaudes et un accessoire pour la préparation de snackings. L'accessoire pour la préparation de verrines chaudes comprend quatre verrines et un support comportant quatre zones de réception de ces quatre verrines. Cet accessoire pour la préparation de verrines chaudes est placé dans la cuve de la friteuse à air chaud en lieu et place du panier qui est habituellement disposé dans cette cuve pour recevoir les aliments à cuire. De même, l'accessoire pour la préparation de snacking peut comprendre une grille placée soit en lieu et place du panier habituellement disposé dans la cuve, soit au-dessus du panier.

Les documents US 2014/366746 A1 et FR2871042A1 décrivent un appareil de cuisson du type friteuse à air chaud comprenant une cuve, un panier, un accessoire, tous deux pouvant être positionnés de manière amovible dans la cuve. En outre, ledit appareil comprend un système de manipulation configuré pour être assemblé de manière amovible avec le panier ou avec l'accessoire de sorte à permettre la manipulation soit du panier soit de l'accessoire pour son insertion dans la cuve et son retrait de la cuve.

Cependant, le nombre d'accessoires proposé par ces documents est limité.

La présente invention vise à résoudre en tout ou partie cet inconvénient, notamment en proposant d'autres configurations d'accessoires.

### Résumé de l'invention

La présente invention met en oeuvre un appareil de cuisson de type friteuse à air chaud qui comporte au moins un accessoire de cuisson, la conception dudit appareil facilitant la manipulation de l'au moins un accessoire de cuisson en toute sécurité, sans risque de se brûler. Un autre but de la présente invention est de permettre la mise en oeuvre d'une gamme étoffée d'accessoires de cuisson, chaque accessoire de cuisson pouvant être placé dans une cuve et manipulé très aisément et en toute sécurité. Dans la suite de la description, le terme accessoire est employé pour définir l'accessoire de cuisson.

Selon l'invention, l'appareil de cuisson de type friteuse à air chaud, comprend une cuve, un panier et au moins un accessoire. Le panier ou l'au moins un accessoire peuvent être positionnés, l'un ou l'autre, de manière amovible dans la cuve ; en d'autres termes, soit le panier est placé dans la cuve soit l'accessoire est placé dans la cuve.

Bien entendu, l'appareil de cuisson selon l'invention comprend d'autres caractéristiques semblables aux appareils de cuisson traditionnels qui permettent de constituer une chambre de cuisson intégrant la cuve avec le panier ou l'accessoire une fois ledit appareil fermé, un système de soufflage d'air chaud incorporé dans ledit appareil permettant de pulser de l'air chaud dans cette chambre. L'air chaud pulsé circule dans la chambre et dans la cuve qui contient le panier ou l'accessoire, assurant ainsi la cuisson des aliments placés dans le panier ou dans l'accessoire.

Selon l'invention, l'appareil de cuisson comprend un système de manipulation configuré pour être assemblé de manière amovible avec le panier ou avec l'au moins un accessoire de sorte à permettre la manipulation soit du panier soit de l'au moins un accessoire pour son insertion dans la cuve et son retrait de la cuve. Cela permet de manipuler en toute sécurité, au moyen d'un seul et même ustensile, tant le panier que l'accessoire une fois la cuisson des aliments réalisée.

Selon l'appareil de cuisson objet de l'invention, l'au moins un accessoire est un accessoire de réchauffage. Cet accessoire comprend au moins un récipient et un support de l'au moins un récipient. En outre, le système de manipulation est configuré pour être assemblé de manière amovible avec le panier ou avec le support réceptionnant l'au moins un récipient. En complément, le support peut comprendre un système de stabilisation permettant de le maintenir stable une fois sorti de la cuve et posé sur un plan, par exemple une table ou un plan de cuisine, afin d'avoir les mains libres durant le retrait de l'au moins un récipient dudit support.

Selon une première alternative de la présente invention, l'accessoire de réchauffage est conçu pour la préparation de verrines chaudes ; dans ce cas le récipient est une verrine. Cet accessoire comprend quatre ou cinq verrines, le support comprenant respectivement quatre ou cinq zones de réception des verrines.

Selon une seconde alternative de la présente invention, l'accessoire de réchauffage est conçu pour réchauffer des plats plus consistants ; dans ce cas le récipient est un bac ou un bol. De préférence, cet accessoire comprend un bac ou un bol, le support comprenant respectivement une zone de réception du bac ou du bol. On pourrait envisager d'autres réalisations, par exemple avec deux bacs ou deux bols et deux zones de réceptions des bacs ou des bols sur le support.

Selon une réalisation, le système de manipulation comprend une poignée de manipulation et un premier dispositif d'assemblage agencé entre la poignée de manipulation et le panier ou l'accessoire pour assembler de manière amovible la poignée de manipulation avec le panier ou avec l'accessoire. Selon une réalisation, ce premier dispositif d'assemblage comprend au moins deux pattes de support fixées respectivement sur le panier et sur l'au moins un accessoire ; en d'autres termes, ce premier dispositif d'assemblage comprend une patte de support sur le panier et une patte de support sur chacun des accessoires. En outre, un logement est agencé sur un corps fixé à la poignée de manipulation pour recevoir l'une ou l'autre des pattes de support, des premiers moyens de verrouillage permettant la solidarisation de la patte de support logée dans le corps. Selon une réalisation, ces premiers moyens de verrouillage comprennent au moins une gâche agencée sur chaque patte de support, au moins un pêne agencé dans le corps pour s'engager dans l'au moins une gâche lorsque la patte de support est logée dans le corps et un mécanisme d'actionnement de l'au moins un pêne.

Selon une réalisation, l'appareil de cuisson comprend un corps principal, la cuve étant amovible du corps principal. En outre, le système de manipulation comprend un second dispositif d'assemblage agencé entre la cuve et la poignée de manipulation pour assembler de manière amovible la poignée de manipulation avec la cuve, ladite poignée de manipulation étant assemblée ou non avec le panier ou avec l'un des accessoires. Selon une mise en oeuvre bien connue sur les appareils de cuisson traditionnels avec une cuve amovible, l'insertion de la cuve dans le corps et son retrait de celui-ci s'effectue à la manière d'un tiroir, en tirant ou en poussant sur la poignée de manipulation. Cette insertion de la cuve dans le corps à la manière d'un tiroir permet de fermer l'appareil de cuisson et de constituer la chambre de cuisson, intégrant ladite cuve. Bien entendu, l'invention reste applicable aux appareils de cuisson de type friteuse à air chaud avec cuve fixe.

Ainsi, le système de manipulation comprend une seule poignée de manipulation qui peut être fixée sur le panier seulement, sur l'au moins un accessoire seulement, sur la cuve seulement, à la fois sur le panier et sur la cuve, ou à la fois sur l'accessoire et sur la cuve. Grâce aux premier et second dispositifs d'assemblage, le système de manipulation permet soit de manipuler concomitamment la cuve avec le panier ou l'accessoire incorporé dans celle-ci, soit de manipuler le panier ou l'accessoire seul, libéré et dégagé de la cuve, soit de manipuler la cuve seule, libérée et dégagée du panier ou de l'accessoire, de sorte à permettre un premier mode de cuisson d'aliments dans le panier incorporé dans la cuve, au moins un second mode de cuisson d'aliments au moyen de l'au moins un accessoire incorporé dans la cuve et un troisième mode de cuisson d'aliments directement dans la cuve, le panier et l'accessoire étant extraits de celle-ci. En d'autres termes, le système de manipulation permet de modifier la configuration de l'appareil de cuisson pour utiliser celui-ci :
- soit comme un appareil de cuisson traditionnel (premier mode de cuisson), la capacité de cuisson étant définie par le volume du panier dans lequel sont placés les aliments à cuire, la manipulation du panier assujetti ou non à la cuve s'effectuant grâce au système de manipulation,
- soit comme un appareil de cuisson à capacité de cuisson augmentée (troisième mode de cuisson), les aliments à cuire étant alors placés directement dans la cuve qui peut être manipulée aisément sans le panier et sans l'accessoire grâce au système de manipulation, afin d'être insérée dans le corps principal de l'appareil et retirée dudit corps principal une fois les aliments cuits,
- soit comme un appareil de cuisson adapté au type d'accessoire utilisé (au moins un deuxième mode de cuisson), la manipulation de l'accessoire assujetti ou non à la cuve s'effectuant grâce au système de manipulation.

Selon une réalisation, le second dispositif d'assemblage comprend le corps solidaire de la poignée de manipulation, une zone de réception agencée sur la cuve pour recevoir ce corps et des seconds moyens de verrouillage permettant la solidarisation du corps logé dans la zone de réception. Selon une réalisation, les seconds moyens de verrouillage comprennent une ouverture agencée sur la zone de réception, un loquet agencé sur le corps et un mécanisme d'actionnement du loquet.

Selon une réalisation de l'appareil de cuisson non couvert par l'étendue de protection de l'invention telle que définie par les revendications, l' accessoire comprend une grille munie d'un contour, le système de manipulation étant configuré pour être assemblé de manière amovible avec le panier ou avec le contour de la grille.

Selon une réalisation de l'appareil de cuisson non couvert par l'étendue de protection de l'invention telle que définie par les revendications, l' accessoire comprend une plaque, au lieu d'une grille, la plaque étant également munie d'un contour, le système de manipulation étant configuré pour être assemblé de manière amovible avec le panier ou avec le contour de la plaque.

Selon une réalisation de l'appareil de cuisson objet de l'invention, l'au moins un accessoire est conçu pour la préparation de gâteaux. Cet accessoire comprend un moule à gâteau muni d'un contour, le système de manipulation étant configuré pour être assemblé de manière amovible avec le panier ou avec le contour du moule à gâteau.

Selon une réalisation, l'au moins un accessoire de l'appareil de cuisson objet de l'invention comprend un support filaire formant un bord périphérique, le système de manipulation étant configuré pour être assemblé de manière amovible avec le panier ou avec le support filaire. Ce support filaire permet la réception d'un ou plusieurs ustensiles complémentaires. En complément, le support filaire peut comprendre un système de stabilisation permettant de le maintenir stable une fois sorti de la cuve et posé sur un plan, par exemple une table ou un plan de cuisine, afin d'avoir les mains libres durant le retrait du ou des ustensiles complémentaires.

Selon une première mise en oeuvre d'un ustensile complémentaire, l'accessoire comprend au moins un pic, le support filaire comprenant au moins une paire de cavités sur laquelle prend appui le pic. De préférence, l'accessoire comprend quatre à huit pics, de préférence six pics, et quatre à huit paires de cavités, de préférence six paires de cavités, chaque pic prenant appui sur une paire de cavités. Ainsi, l'accessoire permet la préparation de brochettes.

Selon une seconde mise en oeuvre d'ustensiles complémentaires, l'accessoire comprend une grille et/ou une plaque et/ou un moule à gâteau. La grille et/ou la plaque et/ou le moule à gâteau sont configurés pour prendre appui sur le bord périphérique du support filaire. Ainsi, l'accessoire permet la préparation de plats de type snacking et grillade lorsque l'ustensile complémentaire utilisé est la grille ou la plaque et l'accessoire permet la préparation de gâteaux lorsque l'ustensile complémentaire utilisé est le moule à gâteau. Selon cette mise en oeuvre, la grille, la plaque et/ou le moule à gâteau comprennent chacun un contour muni d'un rebord, le contour s'engageant dans le support filaire jusqu'à ce que le rebord vienne en butée contre le bord périphérique.

### Brève description des figures

La description ci-après met en évidence les caractéristiques et avantages de la présente invention. Cette description s'appuie sur des figures, parmi lesquelles :
- La figure 1 illustre un accessoire de réchauffage pour la préparation de verrines, placé dans la cuve de l'appareil de cuisson de type friteuse à air chaud selon l'invention ;
- La figure 2 illustre un panier placé dans la cuve en lieu et place d'un accessoire,
- La figure 3 illustre l'accessoire de préparation de verrines avec le système de manipulation fixé à celui-ci,
- La figure 4 illustre le support de verrines seul,
- Les figures 5 à 6 illustrent le système de manipulation seul, selon deux angles de vue différents,
- Les figures 7 et 8 illustrent un premier mode de réalisation des premiers moyens de verrouillage sur le premier dispositif d'assemblage,
- Les figures 9 et 10 illustrent un second mode de réalisation des premiers moyens de verrouillage sur le premier dispositif d'assemblage,
- Les figures 11 à 13 mettent en évidence le premier dispositif d'assemblage entre la poignée de manipulation et le panier ou l'accessoire et le second dispositif d'assemblage entre la poignée de manipulation et la cuve ;
- Les figures 14 et 15 illustrent un autre accessoire non couvert par l'étendue de protection de l'invention telle que définie par les revendications, constituant une grille ;
- Les figures 16 à 21 illustrent un autre accessoire non couvert par l'étendue de protection de l'invention telle que définie par les revendications, constituant un support filaire conçu pour réceptionner des pics, une grille et un moule à gâteau
- La figure 22 illustre un autre accessoire de réchauffage pour des plats plus consistants selon l'invention.

### Description détaillée

Dans la description suivante, les mêmes références sont utilisées pour décrire les caractéristiques identiques ou similaires selon les diverses variantes de conception de l'appareil de cuisson de type friteuse à air chaud.

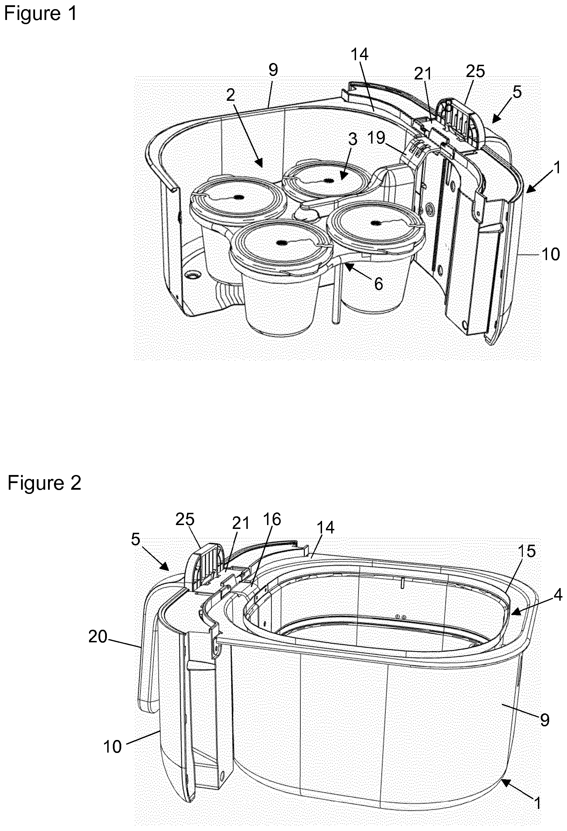

La description suivante et les figures 1 à 13 et 22 s'attachent à mettre en évidence les caractéristiques essentielles de l'invention qui portent sur divers accessoires et sur le système de manipulation dont la conception permet notamment son assemblage soit sur le panier soit sur l'un des accessoires, pour les manipuler l'un ou l'autre. Les autres caractéristiques (système de soufflage d'air chaud ; corps avec chambre dans laquelle sont insérés la cuve et le panier ...) déjà connues des appareils de cuisson traditionnels ne sont pas détaillées ci-après ; l'homme du métier pourra se référer aux friteuses à air chaud existant déjà sur le marché.

Comme le montrent les figures 1 et 2, l'appareil de cuisson comprend une cuve 1 dans laquelle peut être positionné soit un accessoire 2 (figure 1) soit un panier 4 (figure 2). Sur cette figure 1, l'accessoire 2 est un accessoire pour la préparation de verrines 3. La manipulation de l'accessoire 2 ou du panier 4 s'effectue grâce à un système de manipulation 5 qui, outre le fait de permettre une manipulation de l'accessoire 2 ou du panier 4 seul pour le placer dans la cuve 1 ou le retirer de ladite cuve 1, permet de fixer ledit accessoire 2 ou ledit panier 4 en position dans ladite cuve 1 de sorte à manipuler concomitamment la cuve 1 avec l'accessoire 2 ou avec le panier 4 lors de son insertion dans le corps principal (non illustré) de l'appareil de cuisson et lors de son retrait dudit corps principal, à la manière d'un tiroir. Ce système de manipulation 5 permet également de manipuler la cuve 1 seule, sans l'accessoire 2 et sans le panier 4, comme cela apparaîtra plus en détail ci-après.

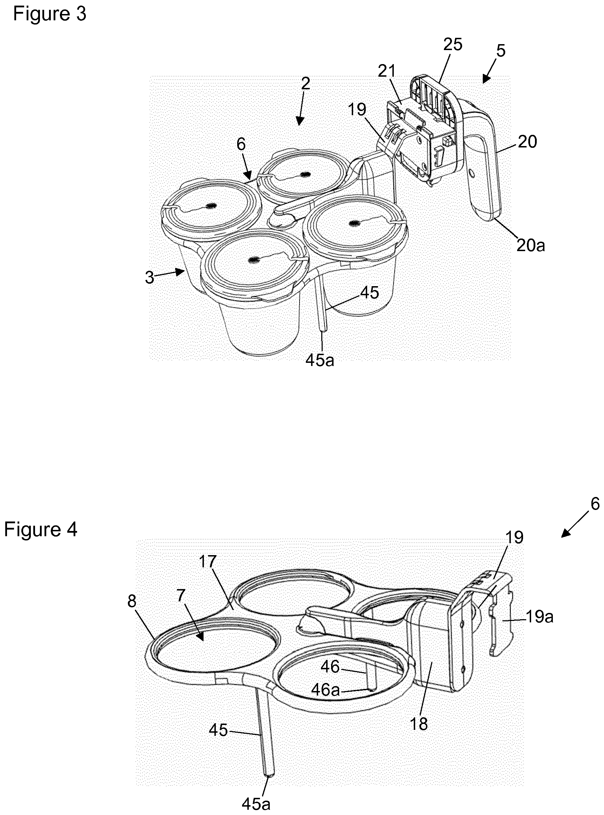

Sur la figure 3, le système de manipulation 5 est fixé à l'accessoire 2. L'accessoire 2 comprend quatre verrines 3 et un support 6 qui comporte quatre zones de réception 7 de ces verrines 3, comme illustré en figure 4. Ces zones de réception 7 sont formées par des ouvertures 8 sur le support 6 dans lesquelles viennent se loger les verrines 3. La forme des ouvertures 8 est adaptée à la forme des verrines 3. Sur les figures 3 et 4, ces formes sont circulaires mais on pourrait prévoir des formes carrées, par exemple.

Comme l'illustrent les figures 1, 2, 11 et 13, la cuve 1 comprend un premier contenant 9, une façade 10, une zone de réception 11 munie dans sa partie inférieure 11a d'une ouverture 12 et une encoche 13 agencée sur le rebord supérieur 14 du premier contenant 9.

Comme l'illustrent les figures 2, 11 et 12, le panier 4 comprend un deuxième contenant 15 et une première patte de support 16 fixée sur le côté avant 15a dudit deuxième contenant 15.

Comme l'illustrent les figures 3 et 4, le support 6 comprend un plateau 17 muni des ouvertures 8, ce plateau 17 étant prolongé vers l'avant par un bras 18 sur lequel est fixée une seconde patte de support 19, de conception identique à la première patte de support 16 sur le panier 4.

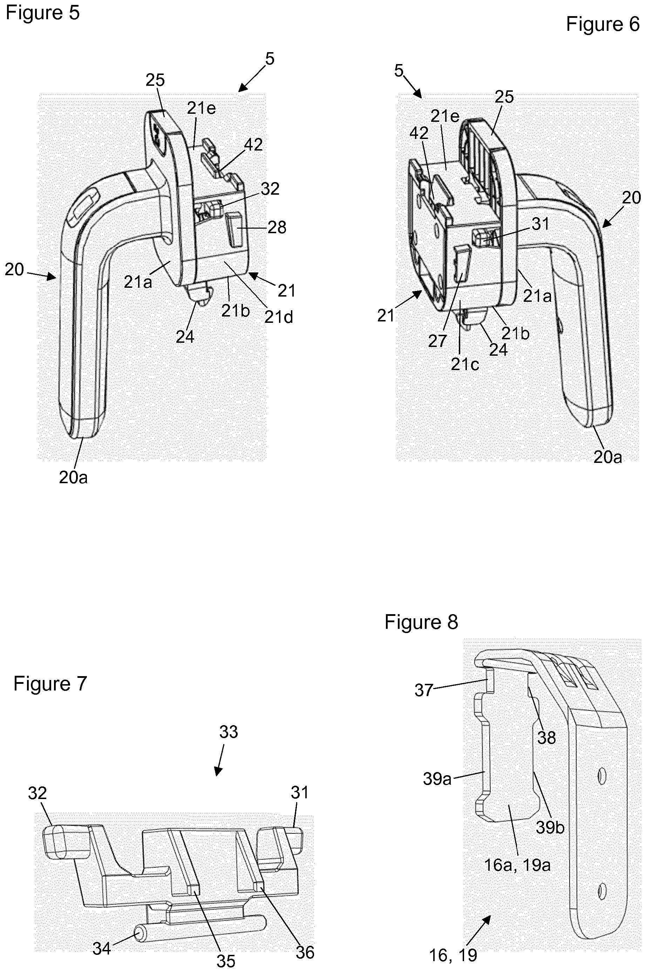

Comme l'illustrent les figures 5 et 6, le système de manipulation 5 comprend une poignée de manipulation 20 et un corps 21 formés d'une seule et même pièce, la poignée de manipulation 20 étant fixée à la face avant 21a du corps 21.

Lorsque le panier 4 ou l'accessoire 2 est placé dans la cuve 1, le corps 21 est logé dans la zone de réception 11 et la première ou seconde patte de support 16, 19 vient en appui contre l'encoche 13 agencée sur le rebord supérieur 14 du premier contenant 9 de la cuve 1.

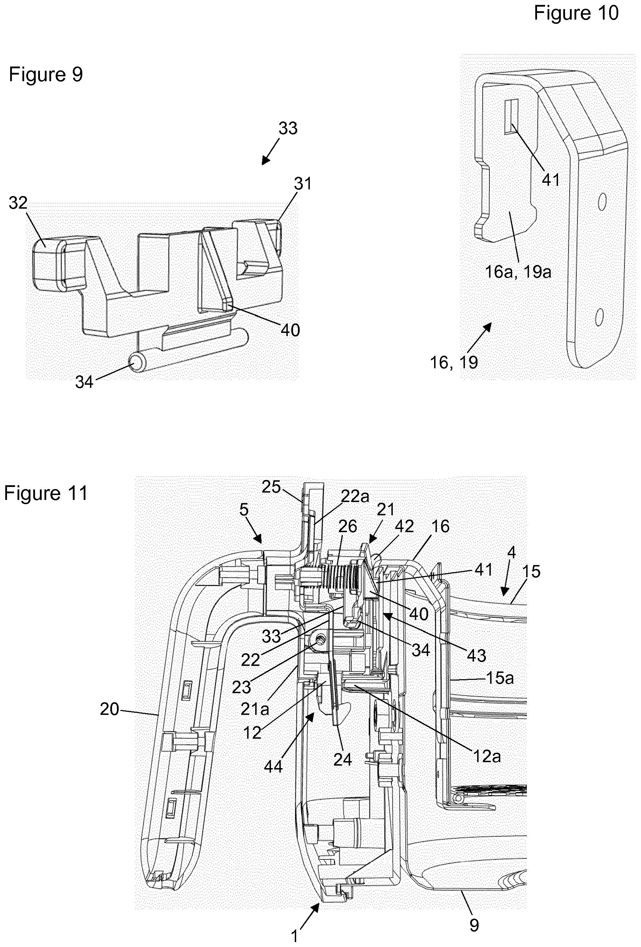

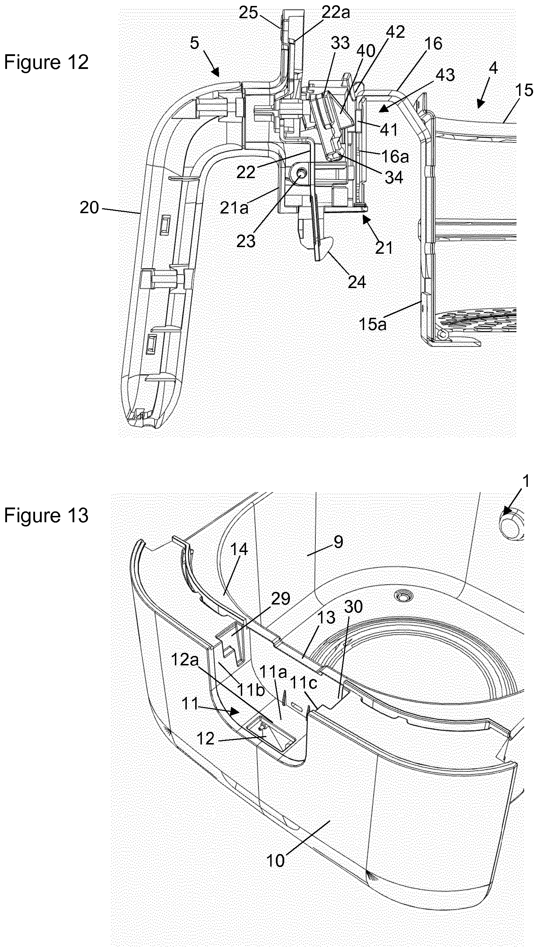

Comme illustré aux figures 1, 2, 5, 6, 11 et 12, le corps 21 intègre un loquet 22 monté en liaison pivot 23 et comportant à son extrémité inférieure une tête 24 formant un crochet, ladite tête 24 étant saillante de la face inférieure 21b du corps 21. L'extrémité supérieure 22a du loquet 22 est fixée à un bouton de commande 25 accessible sur la face avant 21a du corps 21. Lorsque le corps 21 est inséré dans la zone de réception 11 sur la cuve 1, la tête 24 du loquet 22 pénètre dans l'ouverture 12 illustrée à la figure 13 et vient se loger sous le contour arrière 12a de l'ouverture 12. L'actionnement du bouton de commande 25 permet de faire pivoter le loquet 22 pour déplacer la tête 24 dans l'axe de l'ouverture 12, permettant ainsi le retrait du corps 21 en dehors de la zone de réception 11. Un ressort 26 assure le rappel du loquet 22 en position de verrouillage, avec la tête 24 disposée sous le contour arrière 12a de l'ouverture 12, comme illustré en figure 11, une fois le corps 21 introduit dans la zone de réception 11 et le bouton de commande 25 relâché. Deux doigts 27, 28 sont agencés sur les côtés latéraux 21c, 21 d du corps 21, comme l'illustrent les figures 5 et 6. Ces doigts 27, 28 se positionnent dans des encoches de guidage 29, 30 agencées sur les côtés latéraux 11b, 11c de la zone de réception 11 de sorte à caler le corps 21 en translation d'avant en arrière vis-à-vis de la zone de réception 11.

Tel qu'illustré aux figures 1 à 12, le système de manipulation 5 peut être détaché de la première patte de support 16 fixée au deuxième contenant 15 ou de la seconde patte de support 19 fixée au support de verrines 6. Pour cela, le corps 21 comprend sur ses côtés latéraux 21c, 21d deux gâchettes 31, 32 (voir figures 5 et 6) qui sont saillantes desdits côtés latéraux 21c, 21d et formées au moyen d'une seule et même pièce d'actionnement 33 (voir figures 7 et 9) montée en liaison pivot 34 à l'intérieur dudit corps 21 (voir figures 11 et 12). Sur le mode de réalisation des figures 7 et 8, la pièce d'actionnement 33 comprend deux pênes 35, 36 et les première et seconde pattes de support 16, 19 comprennent chacune deux gâches 37, 38 formées par deux encoches sur les côtés latéraux 39a, 39b d'une partie recourbée 16a, 19a disposées à l'avant de ladite patte de support 16, 19. Sur le mode de réalisation des figures 9 et 10, la pièce d'actionnement 33 comprend un seul pêne 40 et les première et seconde pattes de support 16, 19 comprennent une seule gâche 41 formée par un orifice sur la partie recourbée 16a, 19a de ladite patte de support 16, 19. Le corps 21 comprend sur sa face supérieure 21e un logement 42, illustré en figures 5 et 6, dans lequel peut pénétrer la partie recourbée 16a, 19a de la patte de support 16, 19. Lorsque la partie recourbée 16a, 19a de la patte de support 16, 19 est insérée dans le logement 42, le ou les pênes 35, 36, 40 de la pièce d'actionnement 33 s'engagent dans la ou les gâches 37, 38, 41, ce qui verrouille le corps 21 avec la patte de support 16, 19 du panier 4 ou du support 6 de verrines. L'activation de l'une ou l'autre des gâchettes 31, 32 permet de dégager le ou les pênes 35, 36, 40 de la ou des gâches 37, 38, 41, comme le montre la figure 12 (sur laquelle la pièce d'actionnement 33 correspond au mode de réalisation des figures 9 et 10), permettant ainsi l'extraction de la partie recourbée 16a, 19a de la patte de support 16, 19 en dehors du corps 21. Le rappel du ou des pênes 35, 36, 40 dans une position active illustrée en figure 11 est assurée par le ressort 26.

Ainsi, le corps 21 auquel est fixée la poignée de manipulation 20, peut être assemblé de manière amovible avec le panier 4 ou avec le support 6 des verrines 3 grâce à un premier dispositif d'assemblage 43 mis en oeuvre au moyen de la pièce d'actionnement 33 dans le corps 21 qui comporte le ou les pênes 35, 36, 40 et de la partie recourbée 16a, 19a de la patte de support 16, 19 qui comporte la ou les gâches 37, 38, 41, le ou les pênes 35, 36, 40 montés en rappel par ressort 26 et la ou les gâches 37, 38, 41 assurant le verrouillage du corps 21 avec la patte de support 16, 19. De même, le corps 21 peut être assemblé avec la cuve 1 grâce un second dispositif d'assemblage 44 mis en oeuvre au moyen du corps 21 incorporant le loquet 22 et de la zone de réception 11 comportant l'ouverture 12, la tête 24 du loquet 22 et le contour arrière 12a de l'ouverture 12 assurant le verrouillage du corps 21 dans la zone de réception 11. Grâce à ces deux dispositifs d'assemblage 43, 44, le système de manipulation 5 peut être assemblé avec le panier 4 seulement, avec la cuve 1 seulement, avec le support 6 seulement, concomitamment avec le panier 4 et la cuve 1 ou concomitamment avec le support 6 et la cuve 1.

Tel qu'illustré aux figures 3 et 4, le support 6 comporte deux pieds 45, 46 qui s'étendent vers le bas en dessous du plateau 17 de manière à être positionnés plus bas que le fond de chaque verrine 3 positionnée sur ce support 6. Lorsque le support 6 est assemblé avec le système de manipulation 5, les extrémités inférieures 45a, 46a des pieds 45, 46 sont disposées dans un même plan que l'extrémité inférieure 20a de la poignée de manipulation 20, de sorte à pouvoir stabiliser le système de manipulation 5 assemblé avec le support 6 sur un plan de cuisine ou sur une table.

La description ci-dessus s'appuyant sur les figures 1 à 13 fait référence à un accessoire 2 pour la préparation de verrines 3. L'appareil de cuisson objet de l'invention peut comprendre d'autres accessoires 2 en substitution ou en complément de celui décrit précédemment.

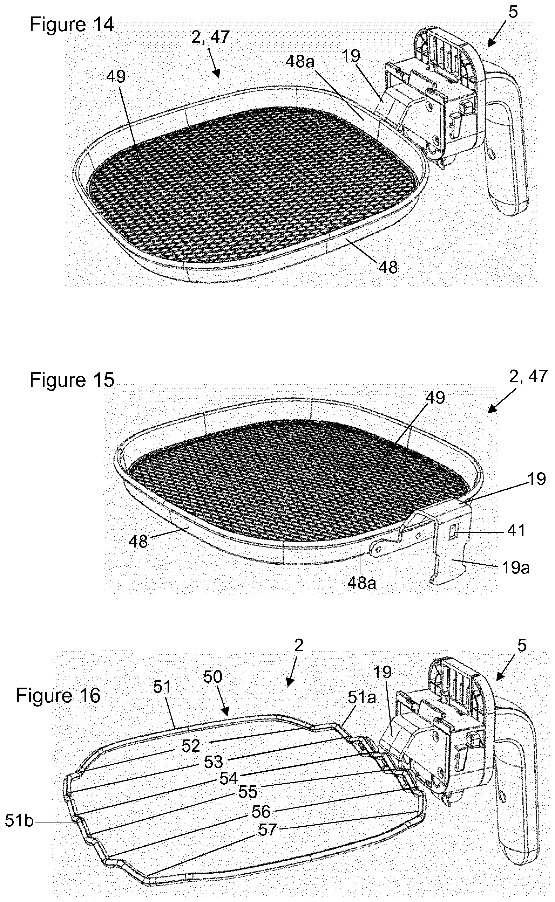

A titre d'exemple, sur les figures 14 et 15, l'accessoire 2 est constitué d'une grille 47 pour la préparation de plats de type snacking. Cette grille 47 est munie d'un contour 48 et d'une plaque grillagée 49. Sur la partie avant 48a du contour 48 est fixée la patte de support 19 qui s'engage et se verrouille dans le corps 21 comme décrit précédemment en regard des figures 1 à 13, afin d'assembler la grille 47 avec le système de manipulation 5. La plaque grillagée 49 et le contour 48 peuvent être fixés ensemble ; on peut au contraire prévoir un assemblage amovible entre la plaque grillagée 49 et le contour 48 afin de faciliter le nettoyage de ladite plaque grillagée 49. En regard de ces figures 14 et 15, il est possible de remplacer la plaque grillagée 49 par une plaque pleine (non illustrée), fixe ou amovible vis-à-vis du contour 48, dans ce cas l'accessoire 2 est constitué d'une plaque (non illustrée) pour la préparation de grillade. Sur le même principe, il est également possible de remplacer la grille 47 par un moule à gâteau (non illustré) muni d'un contour et d'un fond, ledit contour étant fixé à la patte de support 19 de manière semblable au contour 48 de la grille 47.

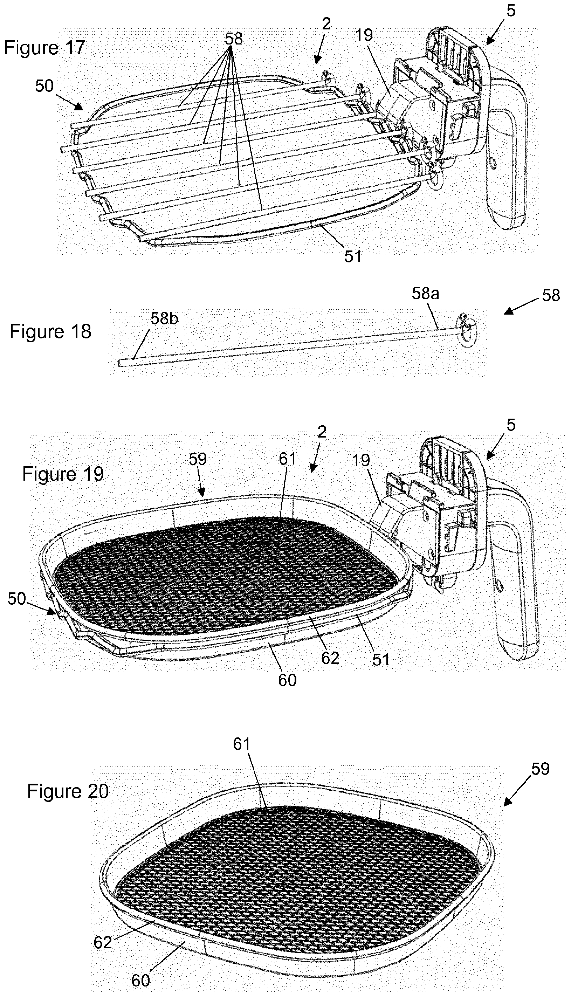

Selon un autre exemple illustré aux figures 16 à 21, l'accessoire 2 comprend un support filaire 50 formant un bord périphérique 51. La partie avant 51a du bord périphérique 51 est fixée à la patte de support 19 qui s'engage et se verrouille dans le corps 21, comme décrit précédemment en regard des figures 1 à 13, afin d'assembler ce support filaire 50 avec le système de manipulation 5. Sur la partie avant 51a et la partie arrière 51b du bord périphérique 51 sont agencées six paires de cavités 52 à 57, chaque paire de cavités 52 à 57 permettant la réception d'un pic 58, les deux extrémités 58a, 58b du pic prenant appui sur une paire de cavités 52 à 57, comme illustré aux figures 16 à 18. Ainsi, l'accessoire 2 permet la préparation de brochettes. Le nombre de paires de cavités sur le bord périphérique 51 et le nombre de pics 58 peuvent varier, de préférence entre quatre et huit, selon les dimensions de la cuve 1 de l'appareil de cuisson.

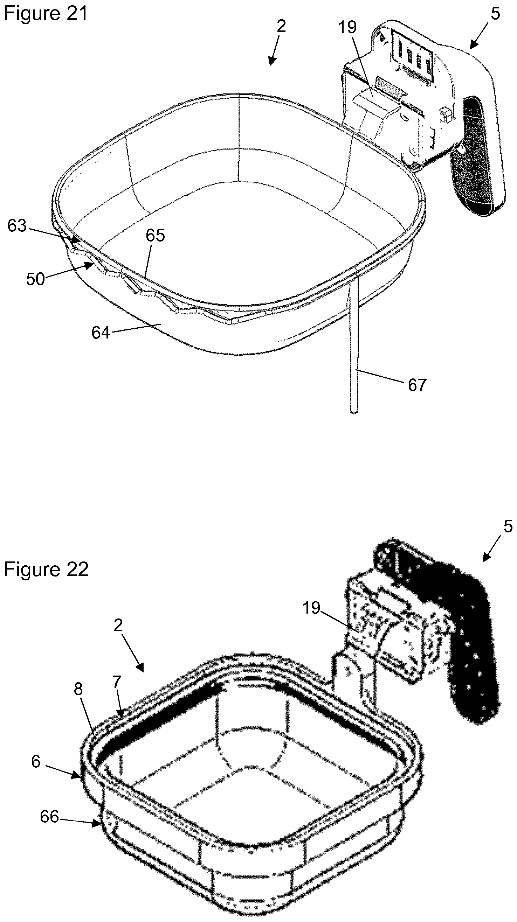

Comme illustré aux figures 16, 19 et 20, cet accessoire 2 peut comprendre, en complément ou en substitution des pics 58, une grille 59 munie d'un contour 60 et d'un fond grillagé 61. Le fond grillagé 61 peut être fixe ou amovible vis-à-vis du contour 60, notamment pour faciliter son nettoyage. Un rebord 62 est formé en partie supérieure du contour 60 ; le contour 60 est dimensionné pour s'engager à l'intérieur du bord périphérique 51 du support filaire 50, tandis que le rebord 62 est dimensionné pour venir en butée contre ledit bord périphérique 51 de manière à maintenir la grille 59 sur le support filaire 50. Ainsi, l'accessoire 2 permet la préparation de plat de type snacking. Il est possible de prévoir, en complément ou en substitution des pics 58 et/ou de la grille 59, une plaque (non illustrée) de conception similaire à ladite grille 59, le fond de la plaque étant toutefois plein au lieu d'être grillagé. Cette plaque permet notamment la préparation de grillades. Il est également possible de prévoir, en complément ou en substitution des pics 58, de la grille 59 et/ou de la plaque, un moule à gâteau 63, illustré en figure 21, dont la conception s'apparente à celle de ladite grille 59, c'est-à-dire avec un contour 64 et un bord périphérique 65, le contour 64 du moule à gâteau 63 étant simplement plus haut que le contour 60 de la grille 59 afin de réceptionner convenablement la pâte à gâteau sans risque de déborder dudit moule. Dans une variante d'accessoire 2 ne prévoyant pas la réception de pics 58, mais simplement d'une grille 59, d'une plaque et/ou d'un moule à gâteau, le bord périphérique 51 du support filaire 50 pourra être conçu sans les paires de cavités 52 à 57.

Comme l'illustre la figure 21, le support filaire 50 peut comprendre en complément deux pieds 67 (un seul illustré sur la figure 21) d'une conception similaire à celle des pieds 45, 46 sur le support 6 illustrés en figures 3 et 4, afin de stabiliser ledit support filaire 50 le temps du retrait des pics 58, de la grille 59, de la plaque ou du moule à gâteau 63.

Sur la figure 22, l'accessoire 2 est un accessoire de réchauffage, au même titre que l'accessoire 2 pour la préparation de verrines 3 illustré en figures 1, 3 et 4, le récipient étant toutefois un bac 66 ou un bol au lieu d'être une verrine 3. Sur la figure 22, l'accessoire 2 comprend un seul bac 66 et le support 6 comprend une seule ouverture 8 pour la formation d'une seule zone de réception 7 adaptée audit bac 66. Ainsi le volume du bac 66 permet le réchauffage de plats consistants. On pourrait toutefois prévoir un accessoire 2 avec deux bacs 66 ayant un volume de moitié de celui illustré en figure 22 et deux zones de réception 7 adaptées sur le support 6.

La description ci-dessus met en évidence l'objet de l'invention. Celle-ci n'a aucun caractère limitatif, des variantes peuvent être envisagées sans sortir du cadre de l'invention. A titre d'exemple, on pourrait prévoir un appareil de cuisson qui comporte une cuve fixe fermée par un couvercle pour constituer une chambre de cuisson dans laquelle est soufflé de l'air chaud, le panier 4 ou l'accessoire 2 se positionnant dans la cuve de manière similaire au mode de réalisation décrit précédemment. Dans ce cas, cependant, le système de manipulation 5 n'aura pas besoin d'être verrouillé avec la cuve 1 lorsque le corps 21 vient se loger dans la zone de réception 11.

## Revendications

1. Appareil de cuisson du type friteuse à air chaud, comprenant une cuve (1), un panier (4) et au moins un accessoire (2), le panier ou l'au moins un accessoire pouvant être positionné de manière amovible dans la cuve, ledit appareil comprend un système de manipulation (5) configuré pour être assemblé de manière amovible avec le panier ou avec l'au moins un accessoire de sorte à permettre la manipulation soit du panier soit de l'au moins un accessoire pour son insertion dans la cuve et son retrait de la cuve, dans lequel l'au moins un accessoire (2) est un accessoire de réchauffage comprenant au moins un récipient et un support de l'au moins un récipient, le système de manipulation (5) étant configuré pour être assemblé de manière amovible avec le panier (4) ou avec le support (6) réceptionnant l'au moins un récipient,
**caractérisé en ce que** lorsque le récipient est une verrine, l'accessoire (2) comprend quatre ou cinq verrines (3) et le support (6) comprend respectivement quatre ou cinq zones de réception (7) des verrines, ou bien **caractérisé en ce que** lorsque le récipient est un bac, l'accessoire (2) comprend ledit bac (66) et le support (6) comprend respectivement une zone de réception (7) du bac.

2. Appareil de cuisson selon la revendication 1, dans lequel le système de manipulation (5) comprend une poignée de manipulation (20) et un premier dispositif d'assemblage (43) agencé entre la poignée de manipulation et le panier (4) ou l'accessoire (2) pour assembler de manière amovible la poignée de manipulation avec le panier ou avec l'accessoire.

3. Appareil de cuisson selon la revendication 2, dans lequel le premier dispositif d'assemblage (43) comprend au moins deux pattes de support (16, 19) fixées respectivement sur le panier (4) et sur l'au moins un accessoire (2), un logement (42) agencé sur un corps (21) fixé à la poignée de manipulation (20) pour recevoir l'une ou l'autre des pattes de support et des premiers moyens de verrouillage permettant la solidarisation de la patte de support (16, 19) logée dans le corps (21).

4. Appareil de cuisson selon la revendication 3, dans lequel les premiers moyens de verrouillage comprennent au moins une gâche (37, 38, 41) agencée sur chaque patte de support (16, 19), au moins un pêne (35, 36, 40) agencé dans le corps (21) pour s'engager dans l'au moins une gâche lorsque la patte de support est logée dans le corps et un mécanisme (26, 33) d'actionnement de l'au moins un pêne.

5. Appareil de cuisson selon l'une quelconque des revendications 2 à 4, lequel comprend un corps principal, la cuve (1) étant amovible du corps principal, le système de manipulation (5) comprenant un second dispositif d'assemblage (44) agencé entre la cuve (1) et la poignée de manipulation (20) pour assembler de manière amovible la poignée de manipulation (20) avec la cuve, ladite poignée de manipulation étant assemblée ou non avec le panier ou avec l'un des accessoires.

6. Appareil de cuisson selon la revendication 5 rattachée à l'une quelconque des revendications 3 ou 4, dans lequel le second dispositif d'assemblage (44) comprend le corps (21) solidaire de la poignée de manipulation (20), une zone de réception (11) agencée sur la cuve (1) pour recevoir le corps (21) et des seconds moyens de verrouillage permettant la solidarisation du corps logé dans la zone de réception.

7. Appareil de cuisson selon la revendication 6, dans lequel les seconds moyens de verrouillage comprennent une ouverture (12) agencée sur la zone de réception (11), un loquet (22) agencé sur le corps (21) et un mécanisme (23, 25, 26) d'actionnement du loquet.

8. Appareil de cuisson selon l'une quelconque des revendications 1 à 7, dans lequel le support (6) comprend un système de stabilisation (45, 46) permettant de le maintenir stable une fois sorti de la cuve (1) et posé sur un plan.

## Patentansprüche

1. Kochgerät vom Typ Heißluftfritteuse, umfassend einen Kochtopf (1), einen Korb (4) und mindestens ein Zubehörteil (2), wobei der Korb oder das mindestens eine Zubehörteil abnehmbar in dem Kochtopf positioniert werden kann, wobei das Gerät ein Handhabungssystem (5) umfasst, das konfiguriert ist, um abnehmbar mit dem Korb oder dem mindestens einen Zubehörteil zusammengebaut zu werden, um die Handhabung entweder des Korbs oder des mindestens einen Zubehörteils zu ermöglichen, um es in den Kochtopf einzuführen und aus dem Kochtopf zu entfernen, wobei das mindestens eine Zubehörteil (2) ein Aufwärmzubehörteil ist, das mindestens einen Behälter und einen Träger des mindestens einen Behälters umfasst, wobei das Handhabungssystem (5) so konfiguriert ist, dass es abnehmbar mit dem Korb (4) oder mit dem Träger (6), der den mindestens einen Behälter aufnimmt, zusammengebaut werden kann,
**dadurch gekennzeichnet, dass**, wenn der Behälter ein Glas ist, das Zubehörteil (2) vier oder fünf Gläser (3) umfasst und der Träger (6) jeweils vier oder fünf Zonen zur Aufnahme (7) der Gläser umfasst, oder auch **dadurch gekennzeichnet, dass**, wenn der Behälter ein Trog ist, das Zubehörteil (2) den Trog (66) umfasst und der Träger (6) jeweils eine Zone zur Aufnahme (7) des Trogs umfasst.

2. Kochgerät nach Anspruch 1, wobei das Handhabungssystem (5) einen Handhabungsgriff (20) und eine erste Zusammenbauvorrichtung (43) umfasst, die zwischen dem Handhabungsgriff und dem Korb (4) oder dem Zubehörteil (2) angeordnet ist, um den Handhabungsgriff mit dem Korb oder dem Zubehörteil abnehmbar zusammenzubauen.

3. Kochgerät nach Anspruch 2, wobei die erste Zusammenbauvorrichtung (43) mindestens zwei Trägerreiter (16, 19), die jeweils am Korb (4) und an dem mindestens einen Zubehörteil (2) befestigt sind, eine Aufnahme (42), die an einem am Handhabungsgriff (20) befestigten Körper (21) angeordnet ist, um den einen oder den anderen der Trägerreiter aufzunehmen, und erste Verriegelungsmittel umfasst, die die feste Verbindung des im Körper (21) aufgenommenen Trägerreiters (16, 19) ermöglichen.

4. Kochgerät nach Anspruch 3, wobei die ersten Verriegelungsmittel mindestens ein Schließblech (37, 38, 41), das an jedem Trägerreiter (16, 19) angeordnet ist, mindestens einen Riegel (35, 36, 40), der im Körper (21) angeordnet ist, um mit dem mindestens einen Schließblech in Eingriff zu kommen, wenn der Trägerreiter im Körper aufgenommen ist, und einen Mechanismus (26, 33) zum Betätigen des mindestens einen Riegels umfassen.

5. Kochgerät nach einem der Ansprüche 2 bis 4, das einen Hauptkörper umfasst, wobei der Kochtopf (1) vom Hauptkörper abnehmbar ist, wobei das Handhabungssystem (5) eine zweite Zusammenbauvorrichtung (44) umfasst, die zwischen dem Kochtopf (1) und dem Handhabungsgriff (20) angeordnet ist, um den Handhabungsgriff (20) abnehmbar mit dem Kochtopf zu verbinden, wobei der Handhabungsgriff mit dem Korb oder mit einem der Zubehörteile zusammengebaut oder nicht zusammengebaut ist.

6. Kochgerät nach Anspruch 5, in Verbindung mit einem der Ansprüche 3 oder 4, wobei die zweite Zusammenbauvorrichtung (44) den Körper (21) umfasst, der fest mit dem Handhabungsgriff (20) verbunden ist, eine Aufnahmezone (11), die auf dem Kochtopf (1) angeordnet ist, um den Körper (21) aufzunehmen, und zweite Verriegelungsmittel, die die feste Verbindung des in der Aufnahmezone aufgenommenen Körpers ermöglichen.

7. Kochgerät nach Anspruch 6, wobei die zweiten Verriegelungsmittel eine auf der Aufnahmezone (11) angeordnete Öffnung (12), eine auf dem Körper (21) angeordneten Klinke (22) und einen Mechanismus (23, 25, 26) zur Betätigung der Klinke umfassen.

8. Kochgerät nach einem der Ansprüche 1 bis 7, wobei der Träger (6) ein Stabilisierungssystem (45, 46) umfasst, das es ermöglicht, ihn stabil zu halten, wenn er aus dem Kochtopf (1) herausgenommen und auf einer Ebene abgestellt ist.

## Claims

1. Cooking appliance of the hot air deep-fat fryer type, comprising a vat (1), a basket (4) and at least one accessory (2), the basket or the at least one accessory being able to be detachably positioned in the vat, said appliance comprises a handling system (5) configured to be detachably assembled with the basket or with the at least one accessory so as to allow either the basket or the at least one accessory to be handled so that it can be introduced into the vat and removed from the vat, in which the at least one accessory (2) is a heating accessory comprising at least one container and one support of the at least one container, the handling system (5) being configured to be detachably assembled with the basket (4) or with the support (6) receiving the at least one container,
**characterised in that** when the container is a verrine, the accessory (2) comprises four or five verrines (3) and the support (6) comprises respectively four or five zones (7) for receiving the verrines, or **characterised in that** when the container is a tray, the accessory (2) comprises said tray (66) and the support (6) comprises respectively a zone (7) for receiving the tray.

2. Cooking appliance according to claim 1, wherein the handling system (5) comprises a handle (20) and a first assembly device (43) arranged between the handle and the basket (4) or the accessory (2) to detachably assemble the handle with the basket or with the accessory.

3. Cooking appliance according to claim 2, wherein the first assembly device (43) comprises at least two support tabs (16, 19) fixed respectively on the basket (4) and on the at least one accessory (2), a housing (42) arranged on a body (21) fixed to the handle (20) to receive either of the support tabs and first locking means allowing to secure the support tab (16, 19) housed in the body (21).

4. Cooking appliance according to claim 3, wherein the first locking means comprise at least one hook (37, 38, 41) arranged on each support tab (16, 19), at least one latch (35, 36, 40) arranged in the body (21) to be engaged in the at least one hook when the support tab is housed in the body and a mechanism (26, 33) actuating the at least one latch.

5. Cooking appliance according to any one of claims 2 to 4, which comprises a main body (1), being detachable from the main body, the handling system (5) comprising a second assembly device (44) arranged between the vat (1) and the handle (20) to detachably assemble the handle (20) with the vat, said handle being assembled or not with the basket or with one of the accessories.

6. Cooking appliance according to claim 5 connected to any one of claims 3 or 4, wherein the second assembly device (44) comprises the body (21) secured to the handle (20), a receiving zone (11) arranged on the vat (1) to receive the body (21) and second locking means allowing the securing of the body housed in the receiving zone.

7. Cooking appliance according to claim 6, wherein the second locking means comprise an opening (12) arranged on the receiving zone (11), a catch (22) arranged on the body (21) and a mechanism (23, 25, 26) for actuating the catch.

8. Cooking appliance according to any one of claims 1 to 7, wherein the support (6) comprises a stabilisation system (45, 46) allowing to stably hold it, once the vat (1) has been removed and placed on a plane.
